Europäisches Patentamt

European Patent Office

Office européen des brevets

(11) Publication number: **0 280 821**
A2

# EUROPEAN PATENT APPLICATION

(21) Application number: 87401943.3

(51) Int. Cl.4: **G06F 9/38**

(22) Date of filing: 28.08.87

A request for correction of the description has been filed pursuant to Rule 88 EPC. A decision on the request will be taken during the proceedings before the Examining Division (Guidelines for Examination in the EPO, A-V, 2.2).

(30) Priority: 24.02.87 US 17517

(43) Date of publication of application:
07.09.88 Bulletin 88/36

(84) Designated Contracting States:
AT BE CH DE ES FR GB GR IT LI LU NL SE

(71) Applicant: **DIGITAL EQUIPMENT
CORPORATION
146 Main Street
Maynard, MA 01754(US)**

(72) Inventor: **Rubinfeld, Paul I.
6 Heard Road
Wayland Massachusetts 01778(US)**

(74) Representative: **Mongrédien, André et al
c/o SOCIETE DE PROTECTION DES
INVENTIONS 25, rue de Ponthieu
F-75008 Paris(FR)**

(54) **Interface between processor and special instruction processor in digital data processing system.**

(57) A processor and auxiliary processor for use in a digital data processing system, the auxiliary processor processing selected instructions, such as floating point instructions. The processor and auxiliary processor are interconnected by status lines, data lines and a bus to which other units in the system may also be connected. When the processor begins processing a selected instruction, it passes the instruction's operation code to the auxiliary processor over the data lines and enables the operands to be transferred to the auxiliary processor over the bus, along with information concerning each operand, which is transferred over the data lines. The processor then signals over the status lines that it is ready to receive the results. The auxiliary processor, when it has finished executing the special instruction, transmits a code over the status lines indicating it is sending the results, and transmits the condition codes over the data lines and the result data over the bus.

FIG. IA

# INTERFACE BETWEEN PROCESSOR AND SPECIAL INSTRUCTION PROCESSOR IN DIGITAL DATA PROCESSING SYSTEM

## BACKGROUND OF THE INVENTION

### 1. Field of the Invention

The invention relates generally to the field of digital data processing systems.

### 2. Description of the Prior Art

A typical digital data processing system includes three basic elements, namely a processor element, a memory element, and an input/output element. The memory element stores information in addressable storage locations. This information includes both data and instructions for processing the data. The processor element includes one or more digital data processing units, or "processors", each of which causes information to be transferred, or fetched, to it from the memory element, interprets the incoming information as either instructions or data, and processes the data in accordance with the instructions. The results are then stored in addressed locations in the memory element.

The input/output element also communicates with the memory element in order to transfer information into the system and to obtain the processed data from it. Units comprising the input/output element normally operate in accordance with control information supplied to it by the processor element. The control information defines the operation to be performed by the input/output unit. At least one class of operations performed by an input/output unit is the transfer of user information, that is, information used by a user program, between the input/output unit and the memory element. Typical units comprising the input/output element include, for example, printers, teletypewriters, and video display terminals, and may also include secondary information storage devices such as disk or tape storage units.

In addition to functioning as input/output devices, disk storage units and, sometimes, tape storage units may also function as part of the memory element. In particular, a memory element typically includes a main memory, whose contents are accessible to the processor relatively quickly but which is generally relatively high-cost storage. Modern main memories are typically implemented using MOS or bipolar semiconductor technology and may provide on the order of a fraction of a megabyte to several tens of megabytes of storage.

In modern data processing systems, it is typical to have one or, if the system is a multiprocessor system, several processing units which can execute all of the instructions that are available in the system. However, in executing several types of instructions, most notably instructions which perform arithmetic on floating point numbers which are comprised of two distinct parts, one representing a fraction and the other representing an exponent, it is common to provide a co-processor to perform the operation.

Floating point numbers are comprised of two distinct parts, namely the fraction and the exponent. Typically, each part must be processed separately, but at the beginning and/or end of processing operations must be performed on the parts, such as shifting and normalization, which depends on the values of the other parts. This complicated processing requires a significant amount of time in a general purpose processor. Accordingly, a co-processor, termed a floating point processor, is provided which includes circuits that are optimized to execute the instruction quickly.

In prior systems, the floating point processor, although essentially an option, could be connected into the main processor, and use the main processor's circuits to retrieve the data to be processed. This was a satisfactory solution prior to the advent of microprocessors. However, if the main processor is a microprocessor, the number of pins allowing connection of the microprocessor to the other circuits, including the floating point processor, is quite limited. Accordingly, a large number of connections just devoted to the floating point processor is not possible.

Another interconnection mechanism which has been used is to allow the floating point processor to monitor system activity and note when the microprocessor is retrieving an instruction for processing floating point data. If such an instruction is received, the floating point processor disables the microprocessor, decodes the instruction, retrieves the required data, executes the instruction and stores the processed data. However, this requires the floating point processor to be able to identify when an instruction is being retrieved and to have extensive interface circuitry and decoding circuitry to identify the data to be processed. In addition, if the microprocessor prefetches instructions, the microprocessor and floating point processor would have to coordinate, since the floating point instruction would not be processed immediately upon being received, but only after the instructions ahead of it have been processed. Also, if the program branches before the instruction has been reached, the instruction would never be executed.

## SUMMARY OF THE INVENTION

The invention provides a new processor for use in a digital data processing system.

The processor includes a new interface to a floating point processor ("FPP"). The interface includes a set of FPP status lines and a set of FPP data lines which carries signals between the processor and the floating point processor. In addition, the floating point processor is connected to the data lines and selected control lines of the processor's input/output bus to allow it to obtain the operand data to be processed and return the processed data. When the processor decodes a floating point instruction, it transfers it over the FPP data lines along with a code transmitted over the FPP status lines indicating that an instruction is being transmitted.

Subsequently, the operands to·be processed is transferred to the floating point processor. The floating point processor monitors certain control lines of the processor's input/output bus to determine whether an operand is coming from memory or from the processor's cache or registers. If an operand is from the processor's cache or registers, the processor places that operand on the input/output bus, along with a code on the FPP status lines indicating that the operand is then on the input/output bus. When the processor starts to retrieve an operand from the memory for the floating point processor, it places an alignment code on the FPP data lines indicating any required data alignment, if some of the data on the input/output bus is not to be used as part of the operand. The floating point processor monitors the control lines which indicate that the memory is returning the operand.

When the processor is ready to receive the processed data from the floating point processor, it places a code to that effect on the FPP status lines. When the floating point processor is ready to transmit the results, it first transmits the condition codes over the FPP data lines, along with a code on the FPP status lines to that effect. Subsequently, the floating point processor transmits the processed data over the input/output lines along with a code to that effect over the FPP status lines.

## BRIEF DESCRIPTION OF THE DRAWINGS .

This invention is pointed out with particularity in the appended claims. The above and further advantages of this invention may be better understood by referring to the following description taken in conjunction with the accompanying drawings, in which:

Fig. 1A is a general block diagram of a digital data processing system which incorporates the invention, and

Fig. 1B is an organizational block diagram of a processor used in the system depicted in Fig. 1A;

Fig. 2, comprising Figs. 2A through 2D, is a timing diagram useful in understanding the invention;

Fig. 3 is a detailed block diagram of a portion of the processor depicted in Fig. 1B particularly relating to the circuits for controlling transfers with other portions of the system.

## DETAILED DESCRIPTION OF AN ILLUSTRATIVE EMBODIMENT

### General Description

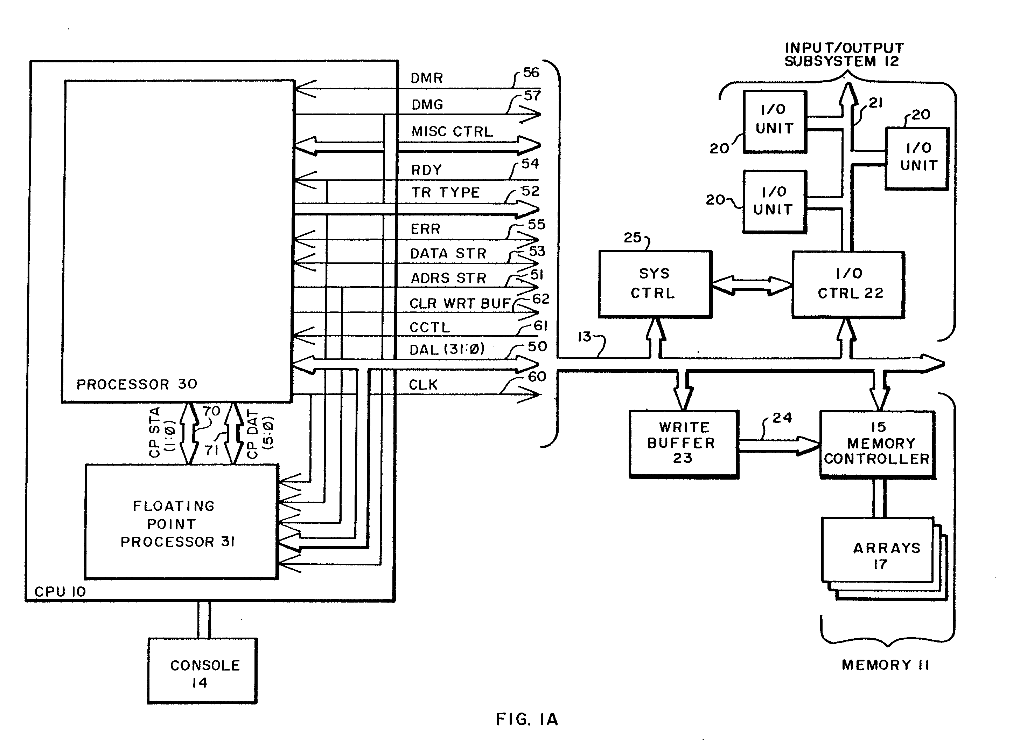

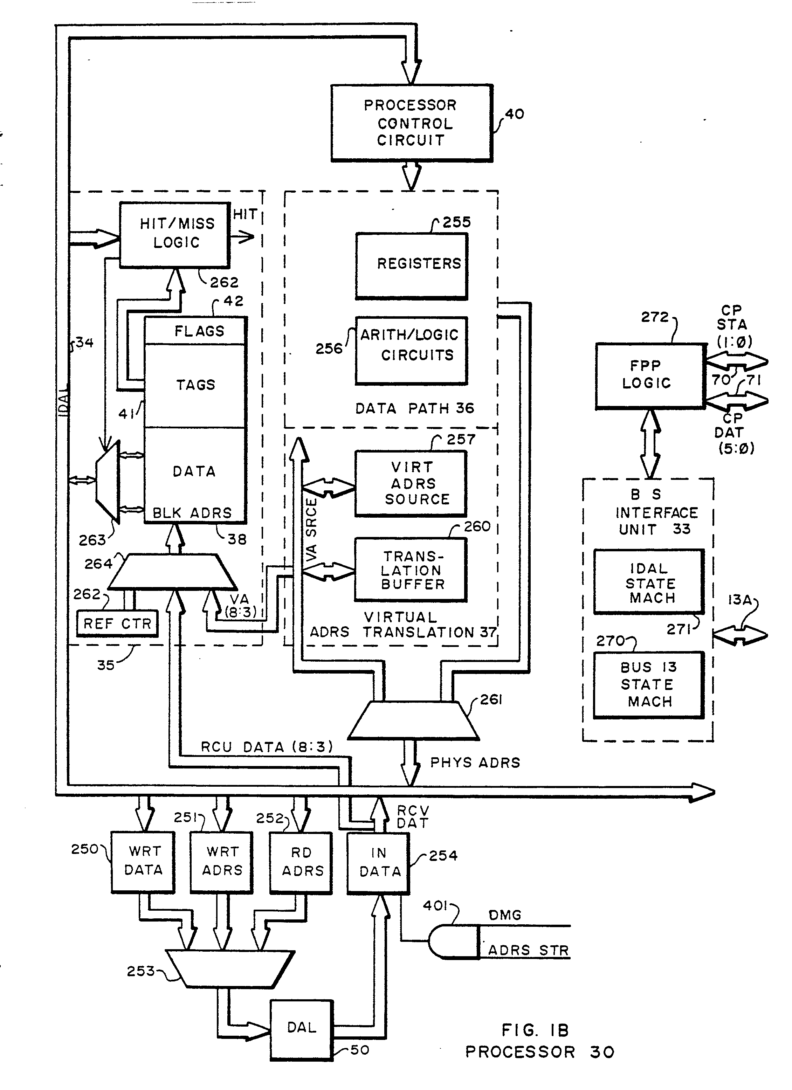

Referring to Fig. 1, a data processing system including the invention includes, as basic elements, a central processor unit (CPU) 10, a memory 11 and one or more input/output subsystems 12 (one input/output subsystem is shown in Fig. 1). A bus 13 interconnects the CPU 10, memory 11 and input/output subsystems 12 in parallel. The CPU 10 executes instructions that are stored in addressable storage locations in the memory 11. The instructions identify operations that are to be performed on operands, which are also stored in addressable locations in the memory unit. The instructions and operands are fetched by the CPU 10 as they are needed, and processed data are returned for storage in the memory 11. The CPU 10 also transmits control information to the input/output subsystems 12, enabling them to perform selected operations, such as transmitting data to or retrieving data from the memory 11. Such data may include instructions or operands which may be transmitted to the memory 11 or processed data which is retrieved from the memory 11 for storage or display.

An operators console 14 serves as the operator's interface. It allows the operator to examine and deposit data, halt the operation of the CPU 10 or step the CPU 10 through a sequence of instructions and determine the responses of the CPU 10 in response thereto. It also enables an operator to initialize the system through a boot strap procedure, and perform various diagnostic tests on the entire data processing system.

The data processing system may include several types of input/output input/output units 20, including disk and tape secondary storage units, teletypewriters, video display terminals, line printers, telephone and computer network units, and the like. All of these units communicate with the bus 13 over a device bus 21 through one or more controllers 22. A controller 22, the device bus 21 to which it is connected, and the input/output units 22 which communicate with the controller defines one input/output subsystem 12.

The memory 11 includes a memory controller 15, which is connected directly to the bus 13 and to a plurality of arrays 17. The arrays 17 contain a plurality of addressable storage location in which information is stored. The memory controller 15 receives transfer requests from the CPU 10 or from an input/output subsystem 12 over the bus 13. Several types of transfer requests may be transmitted over bus 13, which fall into two general categories. In one category, information is written into, or stored in, a storage location, and in the other category, information is retrieved, or read, from a storage location.

The system depicted in Fig. 1 also includes a write buffer 23 which connects to bus 13 and memory controller 15 and intercepts write transfer requests which are directed to by CPU 10 to memory 11. In that system, memory controller 15 does not respond to write requests which are transmitted over the bus 13 by either the CPU 10 or the input/output controller 22. In particular, the write buffer 11 buffers the write information, including both the data to be written and the associated addresses identifying the locations in arrays 17 into which the data is to be stored. When the memory controller can accept a write operation, the write buffer transmits the address and associated data over a private bus 24 to the memory controller 15, which proceeds to enable the arrays 17 to store the data in the location identified by the address. Thus, if the rate of transmission of write data by the CPU 10 over bus 13 becomes too great for the memory 11 to accept, the write buffer 23 can buffer the requests until the memory 11 can accept them. The memory controller 15 is also connected directly to bus 13 to respond to read requests from the CPU 10 or input/output controller 22 and return read data thereto.

It will be appreciated by those skilled in the art that a write buffer 23 can be advantageously used in a uniprocessor system as depicted in Fig. 1, but it will be most advantageously used in a multiprocessor system (not shown). In a multiprocessor system, the memory 11 will receive read and write requests from a number of CPUs and associated input/output subsystems 12. To avoid delaying processing by a CPU 10 waiting to perform a write operation, the write buffer 23 takes the write address and data and the CPU 10 can resume processing.

The write buffer further includes circuits for monitoring read requests over the bus 13 from the CPU 10. If the write buffer 23 determines that a read request has been transmitted over the bus 13 which identifies data which it is buffering and which it has not yet transferred to the memory 11, it inhibits, over its private bus 24, the memory controller from responding to the request. Instead, the write buffer 23 transmits the requested data over the bus 13 to complete the read operation.

The system depicted in Fig. 1 also includes a system control circuit 25 that, under control of the CPU 10, performs arbitration operations thereby regulating access of the various input/output subsystems 12 to the bus 13 if more than one is present in the system.

The CPU 10 includes a processor 30 and an optional floating point processor 31. As is typical, the floating point processor is an option and need not be present in a digital data processing system or CPU 10 constructed in accordance with the invention. The floating point processor includes circuits which are optimized for processing instructions on selected types of data, namely data in floating point formats. Typically, the processor 30 can process the same data, but it requires more time to perform the processing.

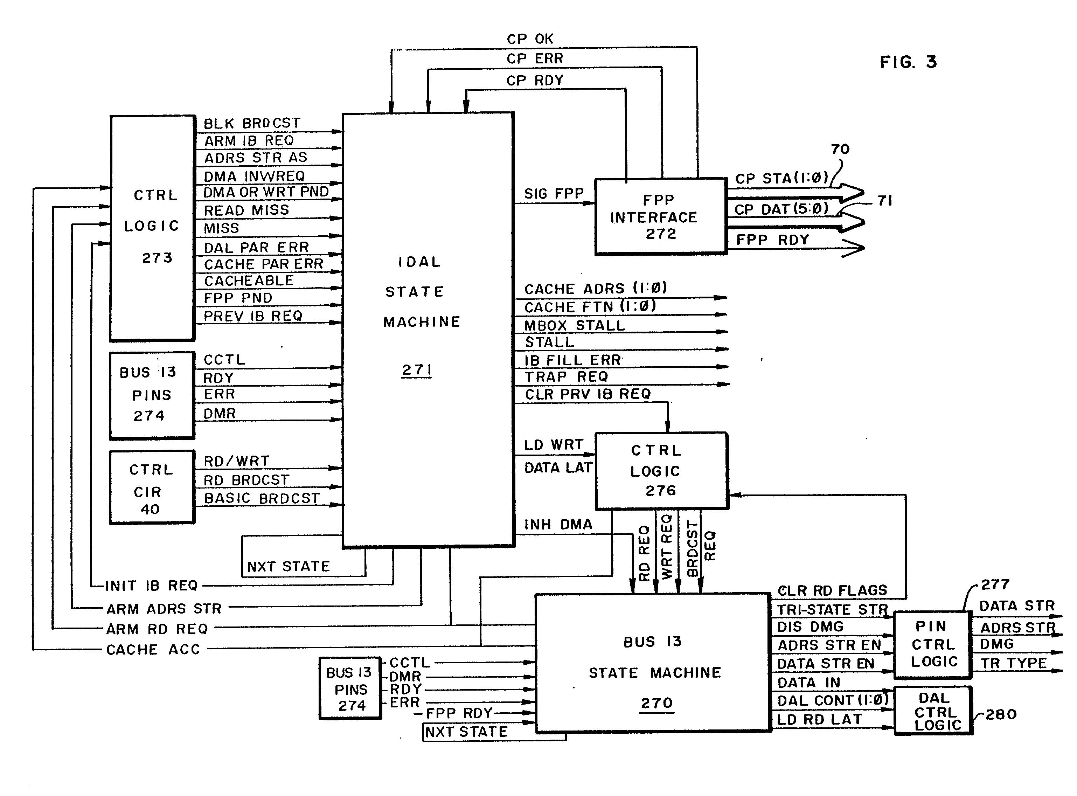

A detailed functional block diagram of one processor 30 used in the system is depicted in Fig. 1B. With reference to Fig. 1B, processor 30 includes a bus interface circuit 33 which connects to various control lines of bus 13 (collectively indicated by reference numeral 13A) and transmits and receives signals over the various lines of the bus as described below. The bus interface circuit also connects to an internal IDAL bus 34 which transfers signals to and from a cache 35, a data path 36, a memory management unit 37, and a processor control circuit 40. A bus interface circuit 33 for one embodiment of processor 30 will be described below in connection with Fig. 3.

A number of registers also connect to the internal IDAL bus 34 and, under control of the bus interface circuit 33 transfers data between the internal IDAL bus 34 and DAL lines 50 of bus 13. Specifically, under control of the bus interface unit 33, a write data register 250 and a write address register 251 receive, respectively, write data and the address of the location in memory 11 or input/output units 12 in which the write data is to be stored. At appropriate times, as described below, the bus interface unit 33 enables the contents of these registers to be transmitted through a multiplexer 253 onto the DAL lines 50 to perform a write operation. Similarly, under control of the bus interface unit 33, a read address register 252 receives an address of a location containing data to be read. At an appropriate time, the bus interface unit 33 enables the contents of the read address register 252 to be coupled through multiplexer 253 onto the DAL lines 50 to perform a read operation. The read data is latched in an input register 254, also under control of the bus interface unit 33. The bus interface unit 33 may enable the contents of the input register 254 to be coupled, as RCV DAT received data signals, onto the internal IDAL bus 34.

The processor control circuit 40 decodes program instructions which are retrieved from the memory 11 and in successive processing cycles enables the data path 36 to perform the arithmetic and logical operations which are required to execute the instruction. The data path 36 includes a set of registers 255 for storing data to be processed and arithmetic and logic circuits 256 for performing the processing. The data path 36 will be described in more detail below in connection with Figs. 3A and 3B.

One embodiment of processor 30 uses virtual addresses and provides virtual address translation circuits 37 for translating the virtual addresses to physical addresses. The virtual address translation circuits include a set of source registers 257 which receive the virtual addresses from other circuits in processor 30, most notably the data path 36, and a translation buffer 260 which includes some translation information. Translations are performed as necessary under control of the processor control circuit 40. Physical addresses are coupled from the translation circuits 37 onto the internal IDAL bus 34 through a multiplexer 261. The data path 36 may also include physical addresses, and provides a second source input for multiplexer 261. The processor control circuit 40 controls multiplexer 261.

Cache memory 35 is a conventional information storage circuit in a CPU 10. Cache memories are described in K. Hwang and F. Briggs, Computer Architecture And Parallel Processing (McGraw-Hill, 1984), Section 2.4, pp. 98, et seq, and V. Hamacher, Computer Organization (McGraw-Hill, 1984), Section 8.6, pp. 306, et seq. Cache memory 35 includes a data storage area 38 comprising a plurality of storage locations. The data storage area 38 is organized into blocks, with each block containing two storage locations. Each storage location stores one word of information, that is, the amount of information which may be transferred over bus 13 at one time. In one specific embodiment, a word of information corresponds to four bytes, or thirty-two binary digits, of information. Thus, each block can store eight bytes of information.

As described below more fully in connection with Fig. 5, cache memory 35 includes hit/miss logic circuits 262 which determines when a physical address generated by the virtual address translation circuits corresponds to an address in the cache memory 35. The low order portion of the virtual address from the source registers 257, in one embodiment the VA SRCE (8:3) signals, is coupled through a multiplexer 264 to select one block in the data storage area, and the associated tags 41 entry. The hit/miss logic circuits 262 then determine whether the contents of the associated tags 41 entry corresponds to the translated physical address. If there is such a correspondence, the hit/miss logic generates an asserted HIT signal which is transmitted to the bus interface unit 33. If the bus interface unit 33 does not receive an asserted HIT signal, it enables, in a conventional manner, an operation over bus 13 to retrieve the contents of the addressed location. If the HIT signal is asserted, the bus interface unit 33 does not enable the operation over bus 13, but instead allows the data from the cache data storage area 38 to be transmitted through a multiplexer 263 over the internal IDAL bus 34. Generally, such data will be transmitted to the data path 36.

As will be appreciated by those skilled in the art, the information stored in a block in the cache memory 35, when it is received from the memory unit 11, is a copy of the information stored in the memory unit 11. Each block in the cache memory 35 has an associated tag 41 whose contents are established by the bus interface circuit 36 to identify the locations in the memory unit 11 from which the information was copied. In addition, each block includes a stale flag 42 which is reset, or cleared, by the bus interface circuit to indicate whether or not the contents of the block are in fact copies of the locations identified by the tag, that is, whether or not the contents of the block are stale.

In one embodiment of cache memory 35 the data storage area 38, tags 41 and flags 42 are dynamic memories. A refresh counter 262, under control of the bus interface unit 33 generates refresh addresses which are coupled through multiplexer 264 to refresh the dynamic memories.

An instruction may contain one or more operand specifiers which identify the location of the operand in the registers in the data path 36, or which identify an address which identifies the location of the operand in the virtual address space. See, for example, U.S. Patent 4,236,206, for a Central Processor Unit For Executing Instructions Of Variable Length, issued to W.D. Strecker, et al., on November 25, 1980. The processor control circuit 40, in conjunction with the data path, decodes each operand specifier to identify the locations of the operands, and then proceeds to obtain them from the identified locations. An operand specifier may itself contain the operand (that is, the operand specifier may be a "literal"), the operand specifier may identify one of the data path's registers (not shown) as containing the operand.

Alternatively, the operand may be in a location in the program's virtual memory space, and the operand specifier may indicate how to determine that location. If the operand is in the virtual memory space, the control circuit 40 enables the memory management circuit 37 to translate the virtual address to the physical address. After the physical address of the operand has been obtained, the bus interface 33 obtains the operand. It first determines whether the operand is in the cache memory 35. If the operand is in the cache memory, the bus interface transmits the operand to the data path 36. On the other hand, if the operand is not in the cache memory 35, the bus interface circuit 33 transmits a read request over the bus 13 to the memory 11 to retrieve the operand. After all of the operands have been obtained, the data path 36 may perform the operation required by the instruction.

The operand specifier may also identify the location into which processed data is to be stored. The control circuit 40 and memory management circuit 37 are used in the same way as described above to determine the physical address. If the processed data is to be stored in memory 11, the bus interface 33 performs the required write operation over bus 13. In addition, if the physical address corresponds to an appropriate tag in cache 35, the bus interface 33 enables the data to be stored in the cache 35.

The bus interface unit 33 includes a state machine 270, which controls the transfer of data over bus 13, and an IDAL state machine 271, which controls the transfer of data over internal IDAL bus 34. The bus interface unit also controls an FPP logic circuit 272 which, in turn, controls communications with the floating point processor 31. The bus interface unit 33 will be described in more detail below in connection with Fig. 3.

Operations Over Bus 13

The bus 13 includes a number of lines for transferring signals representing information among the various units connected to it. In particular, bus 13 includes DAL (31:0) data address lines 50, which carry DAT data and ADRS address signals. If the CPU 10, specifically the processor 30, is initiating a transfer, making it the bus master for the transfer, processor 30 first transmits the ADRS address signals over the DAL (31:0) data address lines 50 and contemporaneously transmits TR TYPE (2:0) transfer type command signals on lines 52, which indicate whether the transfer operation is a read or a write operation. A short time later, sufficient to allow the ADRS address signals and TR TYPE (2:0) transfer type command signals to settle, the processor 30 then asserts an ADRS STR address strobe signal on a line 51.

When the ADRS STR address strobe signal is asserted, all of the other units connected to bus 13 receive and decode the ADRS address and TR TYPE (2:0) transfer type command signals, with the unit containing the location identified by the ADRS address signals being the responding unit, or slave, for the transfer. If the transfer operation is a write operation and the ADRS address signals identify a location in the memory 11, the write buffer 23 is the slave unit). A selected time later after the processor 30 asserts the ADRS STR address strobe signal, it removes the ADRS address signals and TR TYPE (2:0) transfer type command signals from the respective lines.

If the transmitted TR TYPE (2:0) transfer type command signals define a write operation, the master unit then transmits data signals over the lines 50, and then asserts a DATA STR data strobe signal on a line 53. The slave unit then receives and stores the transmitted data. When the data has been stored, the addressed unit then asserts a RDY ready signal on a line 54 if the operation was completed without error, or an ERR error signal on a line 55 if an error occurred during the storage operation.

If on the other hand, the transmitted TR TYPE (2:0) transfer type command signals define a read operation, the slave unit retrieves the data from the location identified by the address signals, transmits them over the DAL (31:0) data address lines 50, and transmits an asserted RDY ready signal over line 54. In response, the processor 30 receives the data and transmits an asserted DATA STR data strobe signal over line 53.

In either a read or a write operation, after the slave has asserted the RDY ready signal or the ERR error signal if an error occurred during the transfer, the processor 30 negates the DATA STR data strobe signal. The slave unit then negates the RDY ready or ERR error signal, and then the processor 30 negates the ADRS STR address strobe signal to complete the transfer.

Units connected to bus 13 other than processor 30 may constitute bus masters and initiate transfers with the memory 11 thereover. The input/output subsystem 12, and in particular, their input/output controller 22 may become bus master. To become bus master, input/output controller 22 asserts a DMR direct memory request signal over a line 56. The processor 30 then asserts a DMG direct memory grant signal on a line 57, which is received by the input/output controller 22. At that point the input/output controller initiates a transfer with the memory in the same way as described above in connection with the processor 30. The input/output controller maintains the DMR direct memory request signal asserted until it has completed the transfer. Thus, if the input/output controller requires multiple transfers, it may maintain the DMR direct memory request signal asserted until it has completed the transfers. While the DMR direct memory request signal is asserted, the processor 30 is in a stalled condition, that is, it monitors the signals on the various lines of bus 13, but otherwise it does not execute any instructions.

If the system includes multiple input/output subsystems 12, separate request signals by the input/output controllers 22 to become bus master are transmitted to the system controller, which asserts the DMR direct memory request signal and monitors the condition of the DMG direct memory grant signal. When the processor 30 asserts the DMG direct memory grant signal, the system controller enables one of the input/output controllers 22 to become bus master according to any priority arbitration scheme.

Bus 13 also has a number of other lines which carry status and control signals. A line 60 carries CLK clock signals which are used to synchronize operations in the system. The various signals on bus 13 are timed in response to the CLK clock signals.

A line 61 carries a CCTL cache control signal which has two functions. As described in copending U.S. Patent Application Serial No. 908,825, filed September 12, 1986, in the name of Paul Rubinfeld, for Cache Invalidate Protocol for Digital Data Processing System, the CCTL cache control signal is asserted by, for example, an input/output controller 22 when it is bus master and performing a write operation to memory 11. The input/output controller 22 asserts the CCTL signal while it is transmitting the ADRS address signals on the DAL data address lines 50, TR TYPE transfer type signals on lines 52 and asserting the ADRS STR address strobe signal on line 51. When the CCTL cache control signal is asserted and the TR TYPE transfer type signals indicate a write operation to memory 11, the bus interface 33 checks the contents of the tags 41 of all of the cache entries. If the ADRS signals on the DAL data address lines 50 of bus 13 correspond to the contents of a tag 41, the bus interface 33 resets the S stale flag 42 for that cache block.

The CCTL cache control signal is also asserted by memory 11 to prevent the processor 30 from storing data in the cache 35 that was requested during a read operation. This may be used, for example, where memory 13 is a multiport memory, that is, if it is being shared by several processors, with each processor accessing the memory 11 over a separate bus, and the data being retrieved is from a set of addressable storage locations that are available to all of the processors. It is undesirable to have such data stored in the cache 35 since another processor may update the contents of the shared locations and, since the updates are not over bus 13 they cannot be detected by the processor 30. If the processor 30 used such data from the cache, it may not correspond to the contents of the appropriate locations in memory. In connection with this use of the CCTL cache control signal, the memory 11 asserts the CCTL cache control signal contemporaneously with its transmission of the data over the DAL data address lines 50, and maintains the CCTL cache control signal asserted until it removes the data.

Bus 13 also includes a line 62 which carries a CLR WRT BUF clear write buffer signal. The CLR WRT BUF clear write buffer signal is asserted by the processor 30 in response to certain conditions internal to processor 30 which would not be otherwise detectable outside of processor 30. For example, the processor 30 asserts the CLR WRT BUF clear write buffer signal when it executes an instruction which causes it to switch process contexts or when it starts to execute an interrupt service routine or an exception routine. The CLR WRT BUF clear write buffer signal is controlled by a field in microinstructions that are generated by the processor control circuit 40 while executing those instructions.

When the CLR WRT BUF clear write buffer signal is asserted, the write buffer 23 determines whether it contains data to be stored in memory 11. If it does not, it does nothing. However, if the write buffer 23 does contain data to be stored in memory 11, it asserts the DMR direct memory request signal and continues to attempt to store its remaining data in the memory 11. In response to the asserted DMR direct memory request signal, the processor asserts the DMG direct memory grant signal, which is ignored by the write buffer 23, and it also stalls. The write buffer 23 maintains the DMR direct memory request signal in the asserted condition until all of the data which it contains has been properly stored in memory 11. If no error occurs in the storage, the write buffer 23 then negates the DMR direct memory request signal allowing the processor 30 to continue.

If an error does occur during a write to memory 11, the write buffer 23 signals an error to the processor, allowing the processor 30 to process routines to locate and correct the error within the current context. This greatly simplifies error recovery. If the processor is allowed to switch contexts before an error is detected, it would be difficult to determine the context which initially generated the data. Error recovery is simplified if the context can be identified, and so the write buffer 23 prevents the processor from switching contexts until all of the data from the current context has been properly stored in memory 11.

Transfers With Floating Point Processor 31

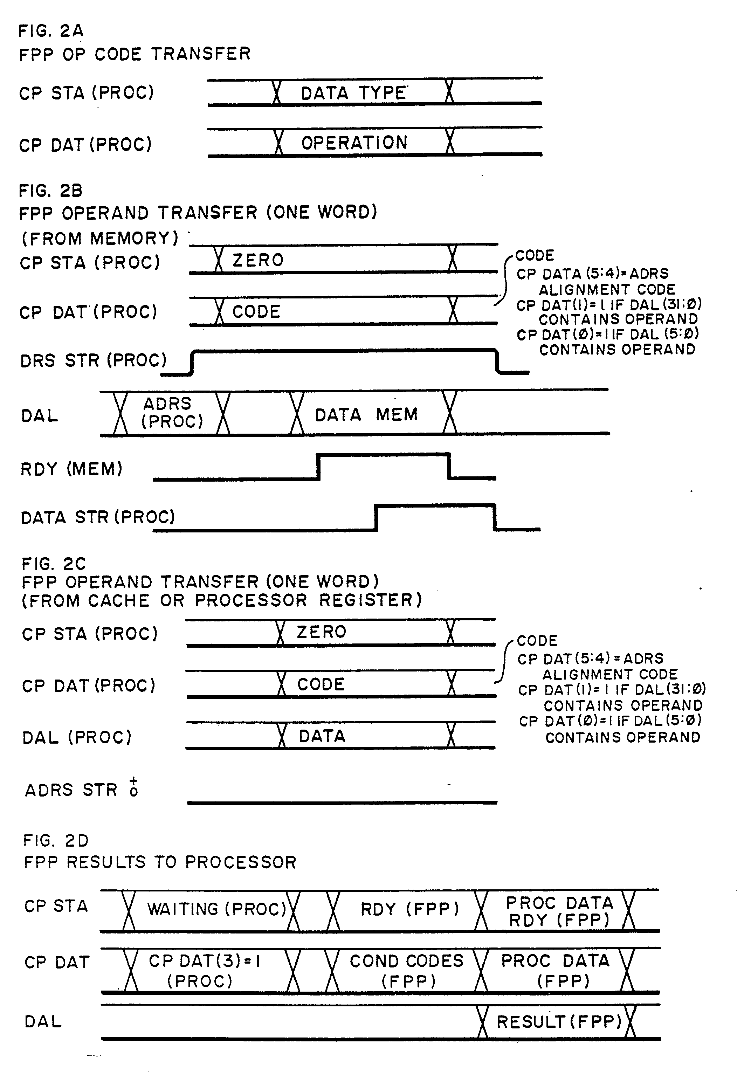

Processor 30 also is connected to floating point processor 31 to (1) transfer the operation codes of floating point instructions to the floating point processor 31 to indicate the operation to be performed, as described below in connection with Fig. 2A, (2) enable operand data to be transferred to the floating point processor 31 for processing as described in connection with Figs. 2B and 2C and (3) obtain processed data from the floating point processor 31 as described in connection with Fig. 2D. The processor 30 and floating point processor 31 are interconnected by two sets of lines 70 and 71, lines 70 carrying CP STA (1:0) floating point status signals and lines 71 carrying CP DAT (5:0) floating point data signals. The floating point processor 31 is also connected to several lines of bus 13, including DAL data address lines 50, line 60 for receiving the CLK signals, line 51 for receiving the ADRS STR address strobe signal, line 54 for receiving the RDY ready signal, line 55 for receiving the ERR error signal, and line 57 for receiving the DMG direct memory grant signal. The CP STA (1:0) floating point status signals and CP DAT (5:0) floating point data signals are transmitted synchronously with the CLK signals on line 60.

While it is idle, the floating point processor 31 repetitively samples, synchronously with the CLK signal on line 60, the conditions of the signals on the lines 70 and 71. When at least one of the lines 71 carries an asserted level signal, the floating point processor 31 latches the signals on those lines and the signals on lines 70. With reference to Fig. 2A, when the processor 30 transmits an instruction to the floating point processor 31, it transmits at least a portion of the instruction's operation code to the floating point processor 31 as CP DAT (5:0) floating point data signals over lines 71 during an interval defined by a selected number of ticks of the CLK clock signals. During the interval, in synchronism with one of the ticks of the CLK clock signals, the floating point processor 31 latches and stores the signals. At the end of the interval, the processor 30 removes the signals from the lines 70 and 71.

The CP DAT (5:0) floating point data signals transmitted over lines 71 are sufficient to identify a floating point arithmetic operation to be performed, and also identifies the number of operands to be used in the operation. Concurrently with the transmission of the operation information over lines 71, other information is transmitted as the CP STA (1:0) floating point status signals over lines 70 which provides further information relating to floating point processing. In particular, floating point operands may be encoded in a number of formats, termed data types, and information as to the format of the operands is transmitted as CP STA (1:0) floating point status signals over lines 70. In one embodiment, some of the information as to the format of the operands is also transmitted over the lines 71 along with the operation information.

Upon receiving the operation code, the floating point processor 31 decodes it to determine the operation to be performed and the number of operands which are required. The processor 30 (in response to sending the operation code) and the floating point processor 31 (in response to receiving the operation code) then go into a condition in which the operands are transferred over DAL data address lines 50. The data type information is used to identify to the floating point processor 31 the format of each of the operands. In connection with some operand formats, more bits are required in some operand formats than can be accommodated by a single transfer over the DAL data address lines 50, and so multiple transfers are required to transfer a single operand. The data type information thus also indicates the number of transfers over DAL data address lines 50 that are required to transfer each operand.

An operand may be stored in one of three sources, namely, in the memory 11 (Fig. 1), in the cache 35, or in the processor's registers (shown in Fig. 3A) in the data path 36. The different operands required for a single operation may also be stored in any of the three sources. If multiple transfers over DAL data address lines 50 are required to transfer a single operand, however, all of the transfers are normally with respect to a single source. Fig. 2B depicts the conditions of the signals that are transmitted to retrieve an operand from memory and Fig. 2C depicts the signals transmitted to transfer an operand from the cache 35 or from registers in the data path 36. In particular, Figs. 2B and 2C depict the conditions of the signals to effect a single transfer over DAL data address lines 50, and it should be recognized that multiple transfers may be required for a single operand.

With reference to Fig. 2B, if an operand is in memory 11, the processor 30 initiates its retrieval from the memory 11. In particular, the processor 30 performs a read operation, as described above, placing the ADRS address signals on the DAL data address lines 50 and asserts the ADRS STR address strobe signal. Shortly thereafter, the processor 30 places CP STA (1:0) floating point status signals on lines 70 having the binary value zero, that is, it negates both of the CP STA (1:0) floating point status signals. In addition, the processor 30 transmits CP DAT (5:0) floating point data signals on lines 71 in which the CP DAT (5:4) floating point data signals contain an address alignment code, which indicates how much of the data transmitted over the DAL data address lines 50 is to be used in the operand. The CP DAT (0) floating point data signal is asserted if the operand is a short literal on the DAL (5:0) data address lines, and otherwise the CP DAT (1) floating point data signal is asserted.

Since the floating point processor 31 has already received the operation information in the procedure described above in connection with Fig. 2A, it is in condition to receive an operand. The asserted CP DAT (5:0) floating point data signal indicates to the floating point processor 31 that it is to sample the signals on selected lines of bus 13, in particular the line 51 which carries the ADRS STR address strobe signal. The floating point processor 31 uses the asserted condition of the ADRS STR address strobe signal to determine that the operand is being retrieved from the memory 11. If the ADRS STR address strobe signal is asserted when it receives the asserted CP DAT (5:0) floating point data signal, the floating point processor 31 latches the data signals on the DAL data address lines 50 in response to the assertion by the memory 11 of the RDY ready signal on line 54. The processor 30 responds with the DATA STR data strobe signal to complete the transfer.

It will be appreciated that, if the memory 11 responds to a retrieval request with an asserted ERR error signal instead of an asserted RDY ready signal, the floating point processor 31 will not latch the transmitted data signals on the DAL data address lines 50. The processor 30 performs any required error recovery operations, such as retries, which may be required and repeats the operation depicted in Fig. 2B.

Fig. 2C depicts a timing diagram useful in understanding the transfer of an operand from the processor 30 to the floating point processor 31, whether the operand is in the cache 35 or in a register in data path 36 (described below in connection with Fig. 3A). In either case, the processor places data signals on the DAL data address lines 50 and CP DAT (5:0) floating point data signals having the same encoding as described above in connection with Fig. 2B, and negates both of the CP STA (1:0) floating point status signals. These signals are maintained by the processor 30 for a selected number of ticks of the CLK clock signals. During that interval, the floating point processor 31 latches the signals on the DAL data address lines 50. If multiple transfers are required over the DAL data address lines 50 to transfer an entire operand, the sequence depicted in Fig. 2C is repeated.

If an operand's data type is such that multiple transfers are required over DAL data address lines 50 to transfer an entire operand, the processor 30, memory 11 and floating point processor 31 repeat the operations depicted in Figs. 2B and 2C until a complete operand is transferred.

It will be appreciated that the sequence of operations depicted in Fig. 2B is similar to the sequence of operations depicted in Fig. 2C, with the following difference. If the ADRS STR address strobe signal is asserted on line 51 when the CP DAT (5:0) floating point data signal is asserted, the floating point processor 31 uses the asserted RDY ready signal as an indication that the operand (or portion of the operand) is then on the DAL data address lines 50. However, if the ADRS STR address strobe signal is not asserted when the CP DAT (5:0) floating point data signal is asserted, the floating point processor 31 uses the assertion of the CP DAT (5:0) floating point data signal as an indication that the operand (or portion of the operand) is then on the DAL data address lines 50. In both cases, the floating point processor 31 latches the signals on the DAL data address lines 50 in synchronism with the CLK clock signals on line 60, in the first case after receiving the RDY ready signal and in the second case after receiving a CP DAT (5:0) floating point data signal which is asserted.

After the operands have been transferred, the processor 30 and floating point processor 31 go into a condition in which the processor 30 is prepared to receive the results when the floating point processor 31 is prepared to send them. Fig. 2D depicts a timing diagram which details the sequence of operations used by the processor 30 and floating point processor 31 to transfer the processed data to the processor 30. The processed data comprises both the condition codes, which indicates whether the result was a negative or a zero and selected other facts concerning the result, and data signals representing the value of the computation performed by the floating point processor 31.

With reference to Fig. 2D, initially the processor 30 transmits a signal code over the lines 70 and 71 indicating that it is ready to receive the processed data. In one embodiment, the CP STA (1:0) floating point status signals are both negated, and the CP DAT (3) floating point data signal is asserted with the others negated. Thereafter, the floating point processor 31 may transmit over lines 70 and 71.

When the floating point processor 31 is ready to transfer the processed data, it transmits CP STA (1:0) floating point status signals representing a code to that effect, concurrently with CP DAT (5:0) floating point data signals representing the condition codes. The floating point processor 31 maintains these signals for a selected number of ticks of the CLK clock signals, and then places the data signals on the DAL data address lines 50, along with a code on lines 70 and 71 to that effect. If multiple. transfers over DAL data address lines 50 to transfer the processed data signals, the floating point processor 31 transfers them synchronously with the CLK clock signals.

While the floating point processor 31 is processing operands and before it has transmitted the results to the processor 30, the processor 30 may assert the DMG direct memory grant signal to allow input/output subsystem 12 to engage in a transfer with memory 11. The floating point processor 31 monitors the condition of line 57 after the processor 30 has indicated that it is ready to receive the processed data. If the DMG direct memory grant signal is asserted on line 57 when the floating point processor 31 is ready to return the processed data, the floating point processor 31 delays returning the processed data until after the DMG signal has been negated.

In addition, if an error occurs in, for example, retrieving operands from memory 11, the processor 30 does not indicate that wishes to receive processed data from the floating point processor 31. The processor 30 does not abort the operation of the floating point processor 31; instead, when the processor 30 transmits a new operation code to the floating point processor 31, the floating point processor 31 operates on that operation code. It will be appreciated that the CP STA (1:0) floating point status signals and CP DAT (5:0) floating point data signals transmitted by the processor 30 over lines 70 and 71 to indicate that it is ready to receive the processed data should not correspond to any operation code, so as to allow the floating point processor 31 to distinguish between them.

Bus Interface Circuit 33

A bus interface circuit 33 in one embodiment of the processor 30 is depicted in Fig. 3. With reference to Fig. 3, the bus interface circuit 33 includes a state machine 270 which controls bus 13 (Fig. 1A) and a second state machine 271 which controls operations over internal IDAL bus 34. The two state machines 270 and 271 operate independently except for several flags and control signals, as described below, which allow state machine 271 to indicate to state machine 270 that operations over bus 13 are required, and response signals provided by state machine 270 to indicate the completion of the operations to state machine 271.

State machine 271, which controls the internal IDAL bus 34, receives input signals from a number of sources within the processor 30, which are generally indicated by control logic 273 from several terminals on bus 13, which are generally indicated by pins 274 of bus 13, and from microinstructions from control circuit 40 (Fig. 1B). State machine 271 transmits output signals to control number of circuits within processor 30, including logic circuits 272 which control the transfers with the floating point processor 31 and several signals which control the function of the cache and the address input multiplexer 264 (Fig. 1B). In addition, output signals from state machine 271 also control logic 276 which contains flags (not shown) indicating that a read operation is pending, which is, in turn, indicated by the condition of a RD REQ read request signal, that a write operation is pending, as indicated by the condition of a WRT REQ write request signal, and that a transfer of operands from the processor 30 to the floating point processor 31 is pending, as indicated by the condition of a BRDCST REQ broadcast request signal.

Control logic 276, under control of the operating system, also can determine whether certain information received over bus 13 (Fig. 1A) during a read operation is to be stored in the cache 35 (Fig. 1B). For example, the operating system may condition processor 35 to store all information which it reads in the cache 35. Alternatively, the operating system may not permit storing processor instructions in the cache 35, and only permit storing of data to be processed in the cache. Generally, however, the operating system will not permit storing information which is received from various control registers in the other portions of the system depicted in Fig. 1A in the cache 35. The control logic 276 conditions a CACHE ACC cacheable access signal to control the caching of the information received over the bus 13.

As described above, an unit external to the processor 30 may also control whether the transfer is to be cached by means of the CCTL cache control signal on line 61 (Fig. 1A)

The state machine 271, directly or indirectly through other control logic (not shown) also controls the loading of write data and read and write addresses into latches 250 through 252, and also controls the transfer of read data from input data latch 254 based on the conditions of the signals on the pins 274.

State machine 270, which controls transfers over the bus 13, receives the RD REQ read request, WRT REQ write request, and BRDCST REQ broadcast request signals from control logic 276, as well as signals from bus pins 274, and generates signals which are transmitted to logic circuits 277 which control the condition of several of the signals comprising bus 13. In addition, the state machine 270 generates signals transmitted to control logic 280, which, in turn, controls the operation of latches 250, 251, 252 and 254 and multiplexer 253 (Fig. 1B) to allow signals to be coupled onto and received from the DAL data/address lines 50 of bus 13. After a read operation has been completed, the state machine 270 also asserts a CLR RD FLAGS clear read flags signal which enables the control logic 276 to negate the RD REQ read request signal.

With this background, the operation of the bus control circuit 33 depicted in Fig. 3 will now be described. During a write operation, as enabled by control circuit 40, if the DMA OR WRT PND (DMA or write pending) signal is not asserted by control logic 273, the state machine 271 first loads the address of the location to be written into the write address latch 251 (Fig. 1B) and determines whether the location is cached in the cache 35 (Fig. 1B). If the DMA OR WRT PND signal is asserted, either another unit in the system depicted in Fig. 1A is using the bus 13 or the state machine 271 has enabled a write address and data to be loaded into the latches 251 and 250 (Fig. 1B), respectively, which has not been transferred over bus 13.

If the DMA OR WRT PND (DMA or write pending) signal is not asserted, a determination is made of whether the location to be written is cached. If the location is cached, the entry in cache 35 corresponding to that location must be updated with the new data. To determine whether the location is cached, the state machine 271 generates CACHE FTN (1:0) cache function signals enabling the cache to be read and CACHE ADRS (1:0) signals enabling the multiplexer 264 to use the physical address generated by the virtual address translation circuit 37. During this operation, the IDAL CACHE XMIT cache transmit signal (Fig. 5) is negated to inhibit the data from the cache to be coupled onto the internal data bus 34. If the location is cached, the HIT signal will be asserted by AND gate 312 (Fig. 5), which will be reflected in the condition of the MISS signal from control logic 273.

If the MISS signal is not asserted, the location to be written is cached. In response to a negated MISS signal, the state machine 271 generates CACHE FTN (1:0) cache function signals enabling a cache write operation and CACHE ADRS (1:0) cache address signals enabling the multiplexer 264 to use the address from the virtual address translation circuit 37. Simultaneously, the data written into the cache entry is stored in the write data latch 250 (Fig. 1B) and the flags in the control logic are conditioned to generate an asserted WR REQ write request signal. During this operation, the MBOX STALL signal is asserted to disable the virtual address translation circuitry from operating.

On the other hand, if the MISS signal is asserted, the location to be written is not cached. In response to the asserted MISS signal, the state machine enables the write data to be latched in the write data latch 250 (Fig. 1B) and the WRT REQ signal to be asserted by control logic 276. In addition, the CACHE ADRS (1:0) cache address signals are conditioned to increment a refresh counter 262 (Fig. 1B) and enable multiplexer 264 to couple the address to the flags 42, tags 41 and data store 38 (Fig. 1B) to permit them to be refreshed. During this operation, the MBOX STALL signal is also asserted to disable the virtual address translation circuitry from operating to prevent it from producing another physical address.

After the write operation is completed, the DMA OR WRT PND (DMA or write pending) signal is negated. This permits another address and write data to be loaded into the latches 250 and 251 (Fig. 1B). The refresh operation is also enabled

The operations performed or enabled by state machine 271 during a read operation depend on whether the requested information is an instruction or data and whether or not the requested information was in cache 35 (Fig. 1B). The information is in the cache if the location identified by the address is cached and if there is no parity error on either the tag 41A, 41B, or the data 38A, 38B (Fig. 5), which would render the cache entry unusable. A read operation may be required to retrieve an instruction, in which case the control logic 273 asserts an IB REQ instruction buffer request signal. Otherwise, control circuit 40 asserts an RD read signal. If the required information is not in the cache 35, the control logic 273 also asserts a READ MISS signal. The READ MISS signal is the complement of the HIT signal depicted in Fig. 5.

In response to an asserted RD read signal from control circuit 40 or the assertion of the IB REQ instruction buffer request signal, the state machine 271 generates CACHE FTN (1:0) cache function signals which enable a cache read, and CACHE ADRS (1:0) cache address signals which enable multiplexer 264 (Fig. 1B) to use the address from virtual address translation logic 37. Simultaneously, the state machine 271 asserts the ARM ADRS STR arm address strobe signal which enables the address from the virtual address translation logic 37 to be loaded into the read address latch 252. If the operation was in response to the IB REQ signal, the state machine 271 also asserts an INIT IB REQ initiate instruction buffer request signal, which enables the control logic 273 to set a flag which, in turn, enables the assertion of a PREV IB REQ previous instruction buffer request signal. If the information is in the cache 35, the state machine 271 allows the information to be coupled from the cache 35 onto as described above in connection with Fig. 5, and the operation terminates.

If the information is not in the cache 35, and if the DMA OR WRT PND (DMA or write pending) signal is asserted, the state machine 271 asserts both the STALL and MBOX STALL signals to stall the processor 30, and CACHE ADRS (1:0) signals allowing a refresh operation. The stall permits the write operation to be completed before proceeding with the read operation.

If the DMA OR WRT PND (DMA or write pending) signal is negated, the read operation proceeds. The state machine 271 enables the control logic 276 to assert the RD REQ read request signal. The state machine 271 then monitors the CACHEABLE, CCTL cache control, RDY ready and ERR error signals to determine the end of the read operation. If the CACHEABLE or CCTL cache control signals indicate that the information should not be cached, there is one transfer over bus 13. On the other hand, if the information is to be cached, two transfers are required, one for the low word and the other for the high word in the cache entry (Fig. 5).

If the transfer is to be cached, when the RDY ready signal is received, if the DAL PAR ERR parity error signal is not asserted, indicating no parity error in the received information, the state machine 271 enables the multiplexer 264 (Fig. 1B) to use the address from the virtual address translation circuit to select an entry in the cache 35, and enables the information to be loaded into either the selected high or low word. The word in the cache 35 into which the information is to be loaded depends on the condition of the VA (2) virtual address bit (see Fig. 5). The information is then coupled to the data path 36 (Fig. 1B).

If the DAL PAR ERR parity error signal is asserted, or if the ERR error signal is asserted on line 55 (Fig. 1A) indicating an error response by the other unit engaged in the transfer, the operation depends on whether the PREV IB REQ previous instruction buffer request signal is asserted. If it is, the control circuit 40 (Fig. 1B) is notified by an asserted IB FILL ERR instruction buffer fill error signal to permit it to take corrective action. If the PREV IB REQ previous instruction buffer request signal is not asserted, the STALL and MBOX STALL signals are asserted to stall the processor 30, and a TRAP REQ trap request signal is asserted, which allows the processor control circuit 40 to perform selected recovery operations.

If the received information is to be cached, and if neither the ERR error signal or the DAL PAR ERR parity error signal is asserted as the data is received, the state machine 271 proceeds to enable as second word to be received and stored in the cache 35. If the second word is properly received, it is stored in the cache 35 as described above. The state machine 271 generates CACHE ADRS(1:0) cache address signals which enable the multiplexer 264 to use the address from the virtual address translation circuit 37 and CACHE FTN (1:0) cache function signals enabling the second word to be stored in the cache entry. The state machine 271 does not, however, enable the information to be transferred to the data path 36.

On the other hand, if the ERR error signal or if the DAL PAR ERR parity error signals are asserted, the MBOX STALL signal is asserted to stall the virtual address translation circuit 37 and the entry in the cache into which the first word was written is marked invalid. At the same time, the CACHE ADRS (1:0) signals are conditioned to enable multiplexer 264 to use the refresh address from refresh counter 262 to refresh the contents of cache 35, and to increment the counter.

State machine 271 enables refresh operations to be performed whenever the state machine 271 is not enabling information to be written into or read out of the cache 35. To enable operations to occur, the state machine 271 generates CACHE ADRS signals which enable the multiplexer 264 to use refresh address signals from the refresh counter 262 to refresh the contents of the storage circuits 38, 41 and 42 (Fig. 1B) in a conventional manner.

State machine 271 also enables entries in cache 35 to be invalidated in response to a DMA INV REQ invalidate request signal from control logic 273. As described above in connection with Fig. 1B, this signal is generated in response to the coincidence of an asserted CCTL cache control signal and an asserted ADRS STR address strobe signal, when both signals are asserted by other units in the system depicted in Fig. 1A. This occurs when the other units are performing DMA (direct memory access) operations with memory 11, and so the DMG direct memory grant signal will be asserted. If another unit transfers data to a location in memory 11 which is cached in cache 35, the cache entry must be marked invalid. With reference to Fig. 1B, in response to the coincidence of the DMG and ADRS STR address strobe signal, an AND gate 401 enables the input data latch 254 to latch the signals, which in this case are address signals, on DAL data/address lines 50.

In response to the DMA INV REQ invalidate request signal, the state machine 271 first attempts to perform a read operation of cache 35 using the address in the input data latch 254, without allowing the data from the cache to be coupled onto the internal bus 34. If the MISS signal is asserted, the location is not cached, and nothing further occurs.

However, if the MISS signal is negated, the location identified by the address in the input data latch 254 is cached, and the state machine initiates a cache invalidate operation. In this, it generates CACHE FTN (1:0) cache function signals which enable an invalidation operation, and CACHE ADRS (1:0) cache address signals which enable the multiplexer 264 to use the contents of the input data latch in the invalidation.

State machine 270 operates in response to the CCTL cache control, DMR direct memory request, RDY ready and ERR error signals from bus 13, RD REQ read request, WRT REQ write request, BRDCST REQ broadcast request, and CACHE ACC cacheable access signals from control logic 276, and INH DMA inhibit direct memory access and ARM RD REQ arm read request signals from state machine 271. If the state machine 270 receives an asserted DMR direct memory request signal, indicating that another unit in the system depicted in Fig. 1A wishes to perform a transfer over bus 13, unless the INH DMA inhibit DMA or BRDCST REQ broadcast request signals are asserted, it negates the DIS DMG disable direct memory grant signal, which, in turn, enables control logic 277 to assert the DMG direct memory grant signal. The asserted DMG direct memory grant signal enables another unit to perform a transfer over bus 13. In addition, the state machine 270 asserts the DATA IN signal which enables DAL control logic 280 to condition the DAL data/address lines 50 to permit other units in the system to use them. The state machine 270 also asserts the TRISTATE STR signal to enable control logic 277 to permit other units to use the DATA STR data strobe, ADRS STR address strobe, and TR TYPE transfer type signals.

Alternatively, if no other unit in the system is to perform a transfer over the bus 13, the state machine 270 enables transfers thereover in response to the RD REQ, WRT REQ, and BRDCST REQ broadcast request signals from control logic 276. If the WRT REQ write request signal is asserted, indicating a write address and write data in latches 251 and 250 (Fig. 1B) respectively, if the DMR signal is not asserted, the state machine 270 generates DAL CONT (1:0) (DAL contents) signals which enable the multiplexer 253 to couple write address from latch 251 onto the DAL data/address lines 50. Simultaneously, the state machine 270 asserts an ADRS STR EN address strobe enable signal which, in turn, enables the control logic 277 to assert the ADRS STR address strobe signal.

Next, the state machine 270 generates DAL CONT (1:0) (DAL contents) signals which enable multiplexer 253 to couple the contents of the write data latch 250 onto DAL data/address lines 50. Simultaneously, the state machine 270 asserts a DATA STR EN data strobe enable signal, which enables the control logic 277 to assert the DATA STR data strobe signal. Thereafter, the state machine waits until the RDY ready or ERR error signals are asserted. If the asserted RDY signal is received, the operation terminates by negating the ADRS STR EN address strobe enable and DATA STR EN data strobe enable signals, which in turn, enables control logic 277 to negate the ADRS STR address strobe and DATA STR data strobe signals, respectively, and the control logic 276 is enabled to negate the WRT REQ signal.

On the other hand, if the asserted ERR error signal is received, the state machine 270 performs a retry attempt, in which it generates DAL CONT (1:0) (DAL contents) signals which enable multiplexer 253 to couple the write data signals from latch 250 onto DAL data/address lines 50.

If both the RDY ready and ERR error signals are asserted, a retry is signaled, and the transfer is attempted again.

If no other operation is occurring, the state machine 270 generates DAL CONT (1:0) (DAL contents) signals which enable multiplexer 253 to couple the contents of the read address latch 252 onto the DAL data/address lines 50. This permits the state machine 270 to initiate a read operation quickly when other signals and conditions permit a read operation to occur. During a read operation, when the RD REQ read request signal is asserted, the state machine 270 asserts the ADRS STR EN address strobe enable signal, which, in turn, enables the control logic 277 to assert the ADRS STR address strobe signal. The state machine 270 then asserts the DATA IN data in signal which enables control logic 280 to condition the DAL data/address lines 50 to enable other units in the system to use them. Simultaneously, the state machine asserts the DATA STR EN data strobe enable, which, in turn, enables the control logic 277 to assert the DATA STR data strobe signal.

The next operations depend on whether the CACHE ACC cacheable access signal is asserted by control logic 276. if the signal is asserted, the retrieved data is cacheable, and so two words are read over bus 13. On the other hand, if the CACHE ACC cacheable access signal is not asserted, the retrieved data is not cacheable and only one word is read over bus 13. If the CACHE ACC cacheable access signal is not asserted, the state machine 270 asserts a RD DATA LAT read data latch signal which, when asserted, enables the input latch 254 (Fig. 1B) to receive the signals on DAL data/address lines 50. When the RD DATA LAT read data latch signal is thereafter negated, the signals are latched by the input latch. The state machine 270 negates the RD DATA LAT read data latch signal in response to the asserted RDY ready signal if the ERR error signal is negated and asserts the CLR RD FLAGS clear read flags signal. In response to the asserted CLR RD REQ signal, the control logic 276 negates the RD REQ read request signal.

On the other hand, if the CACHE ACC cacheable access signal is asserted, a read operation is performed as described above. If the CCTL cache control signal is not asserted when the data is latched in the input data latch, a second operation is also performed. If, on the other hand, the CCTL cache control signal is asserted, indicating that the other unit engaged in the transfer is precluding caching of the data, the second operation is not performed.

The state machine 271 uses the INH DMA inhibit direct memory access signal to inhibit state machine 270 from asserting the DMG direct memory grant signal in response to the receipt of a DMR direct memory request signal from other units. The INH DMA inhibit direct memory access signal is asserted during certain transfers with the floating point processor 31 (Fig. 1A).

The RD BRDCST read broadcast and BASIC BRDCST basic broadcast signal from control circuit 40 enable the state machine 271 to transfer floating point operand information from cache 35 or registers 255 in data path 36 (see Fig. 1B). The control logic 276 is also enabled to assert the BRDCST REQ broadcast request signals to, in turn, enable the state machine 270 to transfer this information as described above. The state machine 271 also enables control logic 273 to set a flag which asserts an FPP PND floating point processor pending signal. The state machine 271 asserts an SIG FPP signal floating point processor signal to indicate to FPP interface circuitry 272 that it is ready to receive the results of a floating point operation from the floating point processor 31. When the condition codes are ready, as described above, the interface circuitry 272 asserts a CP OK signal, and when the result data is ready, it asserts a CP RDY ready signal. In response to the CP RDY ready signal, state machine 271 enables state machine 270 to receive the result data. If the floating point processor 31 signals an error, the interface circuitry 272 asserts a CP ERR error signal. In response to the CP OK, CP RDY or CP ERR signal, the state machine 271 enables the flag controlling the FPP PND floating point processor pending signal to be reset, thereby negating the signal.

The bus interface circuit 33 provides a number of benefits. First, the use of two state machines 270 and 271, each controlling different operations and communicating through flags, simplifies the circuitry considerably.

Furthermore, the state machine 271 enables refreshing of the cache 35, permitting use of dynamic memory elements therein. This reduces the physical size of the cache, or alternatively facilitates providing more cache storage in the same area, as has been the case in the past.

Furthermore, it will be appreciated that the bus interface circuit 33, in retrieving cachable data, first retrieves the data which is required by the program, and then retrieves the other word for storage in the cache entry. In prior systems, the data words were retrieved in the order in which they were stored in memory, and so the first data word may not have been the one immediately required by the program. This delayed resumption of processing until the second word was retrieved.

In addition, the bus interface circuit 33 permits read operations to be initiated, to the extent that a read address is generated and latched in the read address latch 252, while a write operation is pending. The read operation is not completed until the pending write operation is completed, but when the write operation has been completed, the read address can be transmitted immediately.

Finally, the bus interface circuit also permits cache entries to be invalidated, by direct memory access operation performed by other units in the system depicted in Fig. 1A, independently of whether read or write operations have been set up in processor 30. That is, the cache entry invalidate operation can take place, in response to a DMA address received in input latch 254, while write data and a write address are latched in the respective latches 251 and 250 (Fig. 1B) and a read address is latched in latch 252. This simplifies the invalidation process.

The foregoing description has been limited to a specific embodiment of this invention. It will be apparent, however, that variations and modifications may be made to the invention, with the attainment of some or all of the advantages of the invention. Therefore, it is the object of the appended claims to cover all such variations and modifications as come within the true spirit and scope of the invention.

## Claims

1. A digital data processing system including a central processor unit and an auxiliary processor unit interconnected by a bus including data transfer lines, status transfer lines and information transfer lines, said auxiliary processor unit executing selected instructions, each including an operation code, on information identified by each instruction, said central processor unit and said auxiliary processor unit both including:

i. data transfer means connected to said data transfer lines for iteratively transferring said data comprising said operation code and information concerning the data to be processed over said data transfer lines;

ii. information transfer means connected to said information transfer lines for enabling the transfer of information over said information transfer lines;

iii. status transfer means connected to said status transfer lines for transferring status signals over said status lines;

A. said central processor unit including control means connected to its respective data transfer means, information transfer means and said status transfer means and responsive to the receipt of a selected instruction to be processed by said auxiliary processor unit for iteratively enabling (1) the data transfer means to transfer said operation code to said auxiliary processor, (2) the information transfer means and said data transfer means to transfer information to be processed to said auxiliary processor, (3) said status transfer means to indicate to said auxiliary processor unit that it is ready to receive processed information and (4) said data transfer means and said information transfer means to receive the processed information in response to the receipt of a signal by said status transfer means;

B. said auxiliary processor unit including control means connected to its respective data transfer means, information transfer means and said status transfer means for iteratively enabling (1) the data transfer means to receive the operation code from said processor unit, (2) the information transfer means and said data transfer means to receive information to be processed, (3) said data transfer means and said information transfer means to transmit the processed information in response to the receipt of a signal by said status transfer means indicating that said processor unit is ready to receive a result.

2. A central processor unit for use in a digital data processing system including an auxiliary processor unit, said central processor unit and said auxiliary processor unit being interconnected by a bus including data transfer lines, status transfer lines and information transfer lines, said auxiliary processor unit executing selected instructions, each including an operation code, on data identified by each instruction, said processor unit including:

i. data transfer means connected to said data transfer lines for iteratively transmitting said operation code and information concerning the information to be processed over said data transfer lines;

ii. information transfer means connected to said information transfer lines for enabling the transfer of information to be processed over said information transfer lines and for receiving the processed information;

iii. status transfer means connected to said status transfer lines for transferring status signals over said status lines; and

iv. control means connected to said data transfer means, information transfer means and said status transfer means and responsive to the receipt of a selected instruction to be processed by said auxiliary processor unit for iteratively enabling (l) the data transfer means to transfer said operation code to said auxiliary processor, (2) the information transfer means and said data transfer means to transfer information to be processed to said auxiliary processor unit, (3) said status transfer means to indicate to said auxiliary processor unit that it is ready to receive a processed information and (4) said data transfer means and said information transfer means to receive the processed information in response to the receipt of a signal by said status transfer means from said auxiliary processor unit.

3. An auxiliary processor unit for use in a digital data processing system including a central processor unit, said central processor unit and said auxiliary processor unit being interconnected by a bus including data transfer lines, status transfer lines and information transfer lines, said auxiliary processor unit executing selected instructions, each including an operation code, on data identified by each instruction, said auxiliary processor unit including:

i. data transfer means connected to said data transfer lines for iteratively receiving said operation code and information concerning the data to be processed over said data transfer lines;

ii. information transfer means connected to said information transfer lines for receiving information to be processed over said information transfer lines and for transmitting the processed information over said information transfer lines;

iii. status transfer means connected to said status transfer lines for transferring status signals over said status lines; and

iv. control means connected to said data transfer means, information transfer means and said status transfer means for iteratively enabling (1) the data transfer means to receive the operation code from said processor unit, (2) the information transfer means and said data transfer means to receive information to be processed, (3) said data transfer means and said information transfer means to transmit the processed information in response to the receipt of a signal by said status transfer means indicating that said processor unit is ready to receive a result.

4. A system as defined in claim 1 wherein said central processor unit control means includes:

A. central processor unit data transfer control means responsive to the receipt of an instruction to be processed by said auxiliary processor unit for enabling said data transfer means to transfer said operation code to said auxiliary processor unit over said data transfer means,

B. central processor unit information transfer control means connected to said central processor unit data transfer coantrol means, said central processor unit information transfer means and said central processor unit data transfer means for enabling said central processor unit information transfer means and said central processor unit data transfer means to transfer information to be processed to said auxiliary processor unit following the transmission of said operation code to said auxiliary processor unit,

C. central processor unit status transfer control means connected to said central processor unit information transfer control means and said central processor unit status transfer means for enabling said central processor unit status transfer means to transmit an indication to said auxiliary processor unit that it is ready to receive a result in response to said central processor unit information transfer control means enabling a successful transfer to said auxiliary processor unit of information to be processed and for receiving an enabling signal from said auxiliary processor unit; and

D. central processor unit processed information transfer control means connected to said central processor unit status transfer control means, said central processor unit data transfer means and said central processor unit information transfer means for controlling the receipt of the processed information following the receipt of said enabling signal by said central processor unit status transfer means.

5. A system as defined in claim 4 wherein instructions further include data type information, said central processor unit control means further including central processor unit data type transfer control means connected to said central processor unit status transfer means for enabling said central processor unit status transfer means to transfer data type information from an instruction over said status transfer lines contemporaneous with the transfer by said central processor unit data transfer means of the operation code from said instruction over said data transfer lines.

6. A system as defined in claim 4 wherein said central processor unit includes an information source for storing information to be processed in response to an instruction, said information source being connected to said central processor unit information transfer means and said central processor unit information transfer control means, said central processor unit information transfer control means including means for enabling said information source to transfer information to be processed to said central processor unit information transfer means for transmission to said auxiliary processor unit.

7. A system as defined in claim 4 further comprising information storage means for storing information to be processed, said information storage means being connected to said bus for receiving retrieval control signals for controlling the retrieval of information therefrom, said information storage means transmitting retrieved information over said information transfer lines of said bus, said central processor unit information transfer means including means for initiating the retrieval of information from said information storage means.

8. A system as defined in claim 7 wherein said information storage means includes a plurality of addressable storage locations, each identified by an address, for storing information, and said bus includes lines for transferring bus control signals including an address control signal line, an acknowledgement signal line and an information transfer control signal line,

A. said information storage means including means for receiving said address and said address control signal from said bus and for transmitting the information from said location identified by said address over said information transfer lines and for thereafter transmitting an acknowledgement signal over said acknowledgement signal line;

B. said central processor unit information transfer control means further including means for enabling said central processor unit information transfer means to transmit an address and an address control signal over said address control signal line; and

C. said auxiliary processor unit information transfer means further being connected to said acknowledgement signal line for receiving the information from said information transfer lines in response to the receipt of said acknowledgement signal.

9. A system as defined in claim 8 wherein said information storage means transmits an error signal over an error signal transfer line in response to an error, said auxiliary processor unit information transfer means ignoring information transmitted over said information transfer lines in response to the receipt of an error signal.

10. A system as defined in claim 4 wherein said central processor unit data transfer control means includes further enables said central processor unit data transfer means to transfer an alignment code over said data transfer lines contemporaneously with the transfer of information to be processed to said auxiliary processor unit.

11. A central processor unit as defined in claim 2 wherein said central processor unit control means includes:

A. central processor unit data transfer control means responsive to the receipt of an instruction to be processed by said auxiliary processor unit for enabling said data transfer means to transfer said operation code to said auxiliary processor unit over said data transfer means,

B. central processor unit information transfer control means connected to said central processor unit data transfer coantrol means, said central processor unit information transfer means and said central processor unit data transfer means for enabling said central processor unit information transfer means and said central processor unit data transfer means to transfer information to be processed to said auxiliary processor unit following the transmission of said operation code to said auxiliary processor unit,

C. central processor unit status transfer control means connected to said central processor unit information transfer control means and said central processor unit status transfer means for enabling said central processor unit status transfer means to transmit an indication to said auxiliary processor unit that it is ready to receive a result in response to said central processor unit information transfer control means enabling a successful transfer to said auxiliary processor unit of information to be processed and for receiving an enabling signal from said auxiliary processor unit; and

D. central processor unit processed information transfer control means connected to said central processor unit status transfer control means, said central processor unit data transfer means and said central processor unit information transfer means for controlling the receipt of the processed information following the receipt of said enabling signal by said central processor unit status transfer means.

12. A central processor unit as defined in claim 11 wherein instructions further include data type information, said central processor unit control means further including central processor unit data type transfer control means connected to said central processor unit status transfer means for enabling said central processor unit status transfer means to transfer data type information from an instruction over said status transfer lines contemporaneous with the transfer by said central processor unit data transfer means of the operation code from said instruction over said data transfer lines.

13. A central processor unit as defined in claim 11 further including an information source for storing information to be processed in response to an instruction, said information source being connected to said central processor unit information transfer means and said central processor unit information transfer control means, said central processor unit information transfer control means including means for enabling said information source to transfer information to be processed to said central processor unit information transfer means for transmission to said auxiliary processor unit.

14. A central processor unit as defined in claim 11 for use in a system comprising information storage means for storing information to be processed, said information storage means being connected to said bus for receiving retrieval control signals for controlling the retrieval of information therefrom, said information storage means transmitting retrieved information over said information transfer lines of said bus, said central processor unit information transfer means including means for initiating the retrieval of information from said information storage means.

15. A central processor unit as defined in claim 14 for use in a system in which said information storage means includes a plurality of addressable storage locations, each identified by an address, for storing information, and said bus includes lines for transferring bus control signals including an address control signal line, an acknowledgement signal line and an information transfer control signal line, said information storage means including means for receiving said address and said address control signal from said bus and for transmitting the information from said location identified by said address over said information transfer lines and for thereafter transmitting an acknowledgement signal over said acknowledgement signal line;

B. said central processor unit information transfer control means further including means for enabling said central processor unit information transfer means to transmit an address and an address control signal over said address control signal line.

16. A central processor unit as defined in claim 11 wherein said central processor unit data transfer control means further enables said central processor unit data transfer means to transfer an alignment code over said data transfer lines contemporaneously with the transfer of information to be processed to said auxiliary processor unit.

17. An auxiliary processor unit as defined in claim 3 wherein said auxiliary processor unit control means includes:

A. auxiliary processor unit data transfer control means connected to said auxiliary processor unit data transfer means for enabling said auxiliary processor unit data transfer means to receive the operation code from said central processor unit,

B. auxiliary processor unit information transfer control means connected to said auxiliary processor unit data transfer control means for enabling said information transfer means to receive information to be processed in response to the receipt, by said auxiliary processor unit data transfer means, of said operation code from said central processor unit,

C. processing means connected to said auxiliary processor unit data transfer means and said auxiliary processor unit information transfer means for receiving said operation code and said information to be processed and for generating processed information in response thereto; and

D. auxiliary processor unit processed information transfer control means connected to said auxiliary processor unit information transfer means and said processing means for enabling said auxiliary processor unit information transfer control means to transfer processed information over said information transfer lines.

18. An auxiliary processor unit as defined in claim 17 wherein instructions further include data type information, said auxiliary processor unit data transfer control means further including auxiliary processor unit data type transfer control means connected to said auxiliary processor unit status transfer means for enabling said auxiliary processor unit status transfer means to receive data type information from an instruction over said status transfer lines contemporaneous with the receipt by said auxiliary processor unit data transfer means of the operation code from said instruction over said data transfer lines.

19. An auxiliary processor unit as defined in claim 17 wherein said bus includes lines for transferring bus control signals including an address control signal line, an acknowledgement signal line and an information transfer control signal line, said auxiliary processor unit information transfer means further being connected to said acknowledgement signal line for receiving the information from said information transfer lines in response to the receipt of said acknowledgement signal.

20. An auxiliary processor unit as defined in claim 19 wherein said bus further includes an error signal transfer line for transferring an error signal, said auxiliary processor unit information transfer means ignoring information transmitted over said information transfer lines in response to the receipt of an error signal.

FIG. IA

FIG. 1B
PROCESSOR 30

FIG. 2A
FPP OP CODE TRANSFER

CP STA (PROC) ———— X DATA TYPE X ————

CP DAT (PROC) ———— X OPERATION X ————

FIG. 2B
FPP OPERAND TRANSFER (ONE WORD)
(FROM MEMORY)

CP STA (PROC) ———X ZERO X———

CP DAT (PROC) ———X CODE X———

CODE
CP DATA (5:4)=ADRS
ALIGNMENT CODE
CP DAT(I)= I IF DAL (31:Ø)
CONTAINS OPERAND
CP DAT(Ø)= I IF DAL (5:Ø)
CONTAINS OPERAND

DRS STR (PROC)

DAL X ADRS (PROC) X DATA MEM X

RDY (MEM)

DATA STR (PROC)

FIG. 2C
FPP OPERAND TRANSFER (ONE WORD)
(FROM CACHE OR PROCESSOR REGISTER)

CP STA (PROC) ———X ZERO X———

CP DAT (PROC) ———X CODE X———

DAL (PROC) ———X DATA X———

CODE
CP DAT (5:4)=ADRS
ALIGNMENT CODE
CP DAT(I)= I IF DAL (31:Ø)
CONTAINS OPERAND
CP DAT(Ø)= I IF DAL (5:Ø)
CONTAINS OPERAND

ADRS STR ⁺₀

FIG. 2D
FPP RESULTS TO PROCESSOR

CP STA X WAITING (PROC) X X RDY (FPP) X PROC DATA RDY (FPP) X

CP DAT X CP DAT(3)= I (PROC) X X COND CODES (FPP) X PROC DATA (FPP) X

DAL X RESULT (FPP) X

FIG. 3

0 280 821

**SOCIÉTÉ DE PROTECTION**
**DES INVENTIONS**

25, RUE DE PONTHIEU, 75008 PARIS

TEL.: 42.25.17.80 +
TÉLEX : SPIBREV - 660028 F
TÉLÉCOPIE : (1) 45.63.83.33

PARIS LE,   *September 21, 1987*

O/Ref.   *SR 3978 US/DC*

RE.   *European patent application*
*No 87 401943.3*

┌
*EUROPEAN PATENT OFFICE*
*Branch at the Hague*
*Receiving Section*
*PB 5818 Patentlaan, 2*
*2280 HV RIJSWIJK (ZH)*
<u>**NETHERLANDS**</u>
                                          ┘

*Dear Sirs,*

*In the above-identified European patent application, we would like, under* <u>*rule 88 EPC*</u>*, correct some errors which are the following ones :*

*- **page 14** - **lines 18, 19, 20** : we have deleted "the data path 36 will be described in more details below in connection with Figs. 3A and 3B".*

*In fact, Figs. 3A and 3B are not present in the filing document, but only a Fig. 3 which does not comprise the reference 36 ;*

*- **page 31** - **line 5** : (Shown on figure 3A) is deleted for the same reason : Fig. 3A does not exist in the filing document ;*

*- **page 34, line 1** : (Described below in connection with figure 3A) is deleted for the same reason as above ;*

*- **page 42** - **line 14** : "THE" (last word of the line) is substituted by* <u>*a*</u> *which is more appropriate ;*

*- **line 14** : "Figure 5" is deleted because this figure does not exist in the filing document ;*

*- **line 18** : "Figure 5" is deleted for the same reason as above ;*

*- **page 44** - **line 14** : "41A, 41B" and "38A, 38B" are respectively substituted by 41 and 38. "Figure 5" is deleted and substituted by Fig. 1B in which appear the references 41 and 38 ;*

*- **line 22** : "Figure 5" is deleted and substituted by Fig. 3 ;*

*- **page 45** - **line 19** : "Figure 5" is deleted and substituted by "Figure 1B" ;*

-/-

SOCIETE DE PROTECTION DES INVENTIONS

2.

- *page 46 - line 15* : "Figure 5" is deleted ; this figure being not present in the filing document ;

- *page 47 - line 3* : Figure 5 is deleted and "the" is substituted by a which is more appropriate.

The corrected pages are enclosed herewith in triplicate.

Very truly yours,

Société de Protection des Inventions
P. le Gérant,

G. DUBOIS-CHABERT